# EUROPEAN PATENT APPLICATION

(11) **EP 3 879 242 A1**
(43) Date of publication of application: **15.09.2021**
(21) Application number: 21160801.3
(22) Date of filing: 04.03.2021
(51) Int. Cl.: G01G 13/00, G01G 13/18, G01G 19/393, G01G 23/14

(54) **CONVEYANCE MECHANISM AND COMBINATION WEIGHING APPARATUS**

(30) Priority: 13.03.2020 JP 2020043719
(71) Applicant: Ishida Co., Ltd., Kyoto-shi, Kyoto 606-8392 (JP)
(72) Inventor: KISHIKAWA, Mikio, Ritto-shi, Shiga 520-3026 (JP)
(74) Representative: Gill Jennings & Every LLP

(57) **Abstract**

A conveyance mechanism (1) includes: a conveyance face (10) for conveyance of a plurality of articles having adhesion. The conveyance face includes: a first conveyance face (11); a second conveyance face (12) disposed downstream (D2) of the first conveyance face (11) in a conveyance direction (MD); and a protrusion (15) disposed between the first conveyance face and the second conveyance face, the protrusion protruding to space in which the plurality of articles glides. The protrusion protrudes beyond a first extension line (FL1) extending downstream in the conveyance direction along the first conveyance face, and protrudes beyond a second extension line (FL2) extending upstream in the conveyance direction along the second conveyance face.

## Description

### TECHNICAL FIELD

The present invention relates to a conveyance mechanism of conveying an article, and relates particularly to a conveyance mechanism for use in a combination weighing apparatus including a plurality of weighing hoppers.

### BACKGROUND ART

JP 2004-93463 A discloses a combination weighing apparatus including a plurality of weighing hoppers. The combination weighing apparatus in JP 2004-93463 A includes a supply mechanism of supplying articles, the plurality of weighing hoppers that is disposed downstream of the supply mechanism and each temporarily stores an article in order to measure the weight of the article, and a gathering chute that gathers the articles discharged from the plurality of weighing hoppers. Gathering articles from the plurality of weighing hoppers enables formation of an aggregate of articles having a predetermined weight. The aggregate of articles is packaged on the downstream side of the gathering chute.

### SUMMARY OF THE INVENTION

### TECHNICAL PROBLEM

Articles are each weighed in the corresponding weighing hopper and conveyed on the conveyance face of the weighing hopper. After that, the articles are conveyed on the conveyance face of the gathering chute and then are guided to a packing apparatus. Because weighing is performed in the weighing hoppers, if an article remains adhering to, for example, the conveyance face of a weighing hopper or if a delay occurs in conveyance due to an article adhering to the conveyance face, the weight of an aggregate of articles is likely to differ from a previously weighed value. In particular, in a case where a food is coped with as an article, due to powder, such as spice, attached to the surface of the food or due to a high viscosity of the surface of the food, the article tends to adhere easily to a conveyance face.

Therefore, desirably provided are a conveyance mechanism and a combination weighing apparatus capable of preventing an article from adhering to a conveyance face for conveyance of articles.

### SOLUTION TO PROBLEM

A conveyance mechanism according to one aspect includes a conveyance face for conveyance of a plurality of articles having adhesion, in which the conveyance face includes: a first conveyance face (11); a second conveyance face (12) disposed downstream of the first conveyance face (11) (D2) in a conveyance direction (MD); and a protrusion (15) disposed between the first conveyance face and the second conveyance face, the protrusion (15) protruding to space in which the plurality of articles glides. The protrusion protrudes beyond a first extension line (FL1) extending downstream in the conveyance direction along the first conveyance face, and protrudes beyond a second extension line (FL2) extending upstream in the conveyance direction along the second conveyance face. The protrusion protrudes above the first extension line that is an extension line of the first conveyance face. Thus, after an article conveyed from the first conveyance face reaches the protrusion, when part of the article gets over the protrusion, the article is raised from the first conveyance face. The protrusion protrudes above the second extension line that is an extension line of the second conveyance face. Thus, in a case where the article gets over the protrusion, part of the article is raised from the second conveyance face with the article in contact with the protrusion. Therefore, in comparison to a mode in which provided is a flat face including the first conveyance face and the second conveyance face connected in the conveyance direction, the contact area between the article and the conveyance face can be reduced, so that the occurrence of fault due to the article remaining adhering to the conveyance face can be prevented.

According to a preferred aspect, a plurality of the protrusions is disposed at intervals in the conveyance direction. According to the present aspect, an article can be raised from the conveyance face a plurality of times on the conveyance path along the conveyance direction, so that the occurrence of fault due to the article remaining adhering to the conveyance face can be further prevented.

According to a preferred aspect, the protrusion extends in an orthogonal direction (CD) orthogonal to the conveyance direction. According to the present aspect, an article can be raised from the conveyance face over a wide range in the orthogonal direction of the conveyance face, so that the occurrence of fault due to the article remaining adhering to the conveyance face can be further prevented.

According to a preferred aspect, a height of the protrusion to the first conveyance face varies, and a peak (15P) highest in the height of the protrusion is periodic in the orthogonal direction and a plurality of the peaks is disposed at intervals in the orthogonal direction. When an article gets over the protrusion, the article touches peaks of the protrusion. At this time, because the peaks are periodic in the orthogonal direction, namely, because the contacts between the article and the peaks are periodic in the orthogonal direction, the contact area of the article can be reduced. Because of the plurality of the peaks provided, an article over two or more peaks in contact with the article can be raised with the interval between each peak. Therefore, in a section along the orthogonal direction, an article can be raised from the conveyance face.

According to a preferred aspect, the conveyance face is provided with a through portion (18) passing through the conveyance face. According to the present aspect, the through portion passing through the conveyance face enables verification of the state of conveyance of an article, for example, from the side which is the face opposite to the conveyance face (face opposite to the face on which an article is conveyed). Thus, articles having been built up or an article remaining adhering to the conveyance can be grasped.

According to a preferred aspect, provided is a supplier that supplies air onto the conveyance face through the through portion. According to the present aspect, in a case where an article has adhered to the conveyance face, the supplier supplies air, so that the article can be detached from the conveyance face. Therefore, built-up of articles due to the article remaining adhering to the conveyance face can be prevented.

A combination weighing apparatus (100) according to one aspect includes the above conveyance mechanism. The combination weighing apparatus (100) includes: a supply mechanism of supplying articles; a plurality of weighing hoppers (105) that is provided downstream of the supply mechanism and each temporarily stores an article in order to measure a weight of the article; and a gathering chute (106) that gathers the articles discharged from the plurality of weighing hoppers. The conveyance mechanism is included in at least either the plurality of weighing hoppers or the gathering chute. According to the present aspect, in at least either the plurality of weighing hoppers or the gathering chute, an article can be prevented from adhering to the conveyance face, resulting in suppressing deviation in weight between the articles weighed in the plurality of weighing hoppers and an aggregate of articles.

According to a preferred aspect, the conveyance mechanism is included in the plurality of weighing hoppers. The conveyance face includes an upstream region (10M1) upstream of a center (10M) in the conveyance direction of the conveyance face and a downstream region (10M2) downstream of the center in the conveyance direction of the conveyance face. The protrusion is provided at least in the downstream region. Articles are conveyed downstream from the plurality of weighing hoppers and then are gathered in the gathering chute. Because articles are gathered from the plurality of weighing hoppers, if a lag occurs in the timing at which an article is conveyed to the gathering chute, a variation is likely to occur in the weight of an aggregate of articles. The protrusion is provided in the downstream region of the conveyance face close to the gathering chute, so that an article is guided easily and smoothly from the conveyance face to the gathering chute. Thus, an error can be reduced in the weight of an aggregate of articles.

### BRIEF DESCRIPTION OF DRAWINGS

FIG. 1 is a schematic view of a combination weighing apparatus;
FIG. 2 is a perspective view of a conveyance mechanism;
FIG. 3 is a sectional view taken along line A-A of FIG. 2;
FIGS. 4A to 4C are explanatory views of aspects of conveyance of an article; and
FIG. 5 is a schematic perspective view along arrow B of FIG. 2.

### DESCRIPTION OF EMBODIMENTS

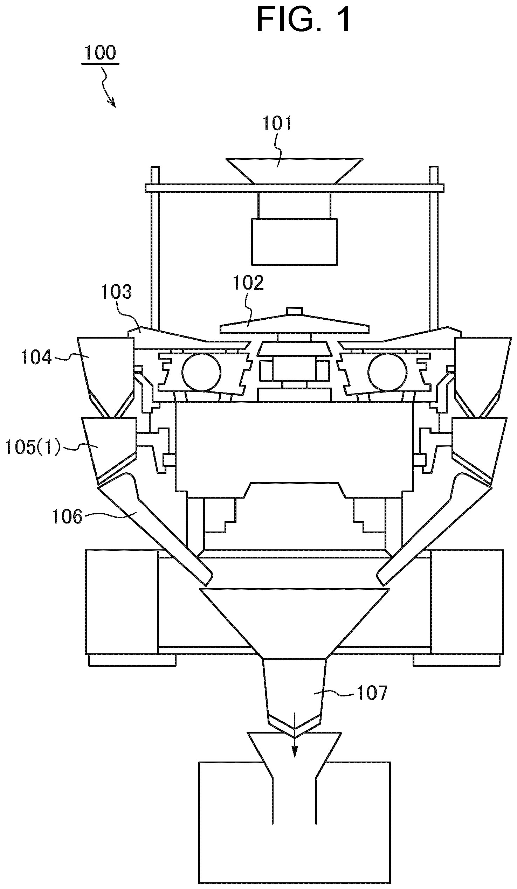

A conveyance mechanism 1 according to a first embodiment will be described below with reference to the drawings. Note that, in the following drawings, the same or similar parts are denoted with the same or similar reference signs. It should be noted that the drawings are schematic and, for example, the ratio between each dimension is different from the actual ones in some cases. Therefore, for example, specific dimensions should be understood in consideration of the following descriptions. In addition, in some cases, parts are different in the dimensional relationship or ratio among drawings. The conveyance mechanism 1 may be used in a combination weighing apparatus 100. FIG. 1 is a schematic view of the combination weighing apparatus 100. The combination weighing apparatus 100 may include a supply chute 101, a distribution table 102, a radial feeder 103, a pool hopper 104, a weighing hopper 105, a gathering chute 106, and a timing hopper 107.

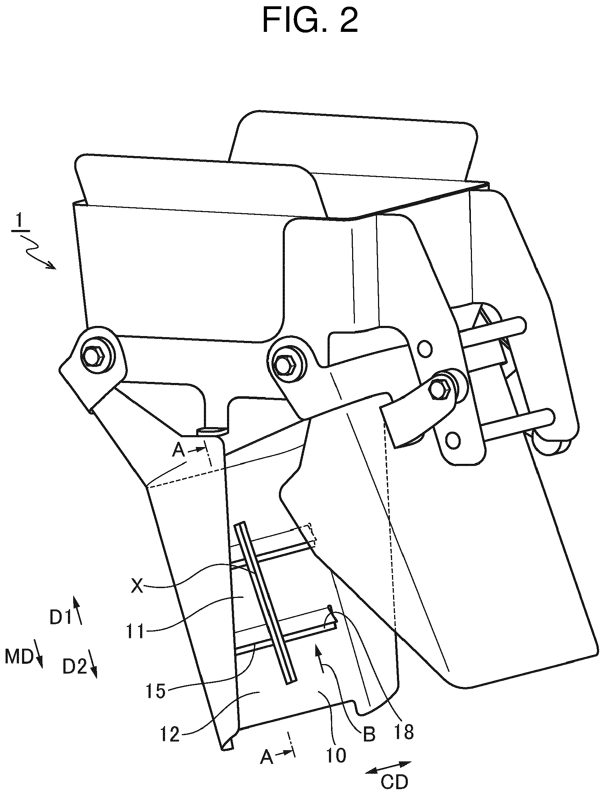

The combination weighing apparatus 100 weighs and conveys an article X as a target to be weighed (refer to FIG. 2). The article X is, for example, a food. Such articles X are put into the supply chute 101, and then the articles X put in the supply chute 101 are supplied to the distribution table 102. The distribution table 102 may convey the articles in a distributing manner. The distribution table 102 supplies the articles to a plurality of radial feeders 103 disposed around the distribution table 102. The radial feeders 103 each convey the article supplied from the distribution table 102 to the pool hopper 104 provided corresponding to the radial feeder 103.

The article supplied to each pool hopper 104 may be received by the weighing hopper 105 disposed below the corresponding pool hopper 104. Each weighing hopper 105 is disposed on the downstream side D2 of a supply mechanism and temporarily stores the article in order to measure the weight of the article. On the basis of the weight value of the article weighed by each weighing hopper 105, a combination weighing operation may be performed. A combination of articles may be selected such that the result of the combination weighing operation is in a predetermined allowable range and is closest to a target value. The articles in the weighing hoppers 105 included in the selected combination may be discharged to the gathering chute 106. The gathering chute 106 gathers the articles discharged from the plurality of weighing hoppers 105. The articles discharged to the gathering chute 106 may be supplied to the timing hopper 107. The timing hopper 107 may supply the articles to, for example, a packing apparatus provided at the post-stage of the conveyance mechanism 1. Note that the weighing hopper 105 has the "conveyance mechanism 1" of the present invention. Note that the "conveyance mechanism" of the present invention is not limited to a weighing hopper and may be adopted to at least any of the pool hopper 104, the gathering chute 106, and the timing hopper 107. In addition, the "supply mechanism" of the present invention may be adopted to at least either a supply chute 101 or a distribution table.

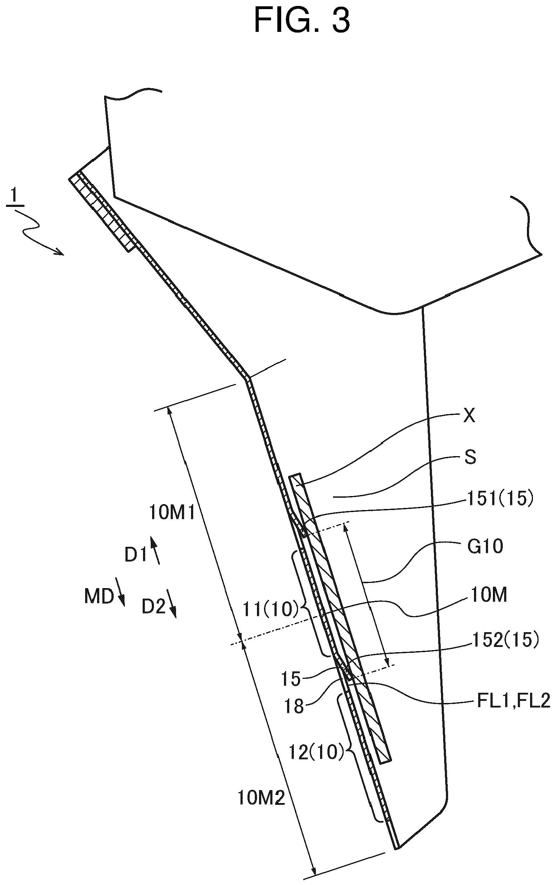

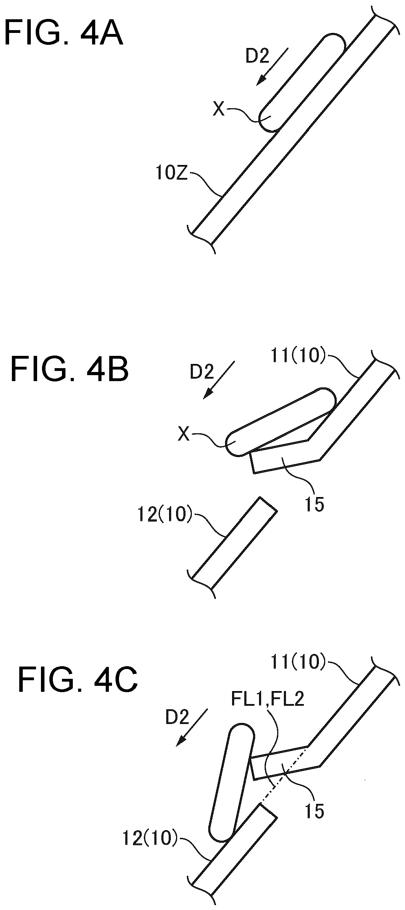

Next, the conveyance mechanism 1 will be described in detail on the basis of FIGS. 2, 3, and 4A to 4C. FIG. 2 is a perspective view of the conveyance mechanism 1. FIG. 3 is a sectional view taken along line A-A of FIG. 2. FIGS. 4A to 4C are explanatory views of aspects of conveyance of an article X. The conveyance mechanism 1 includes a conveyance face 10 for conveyance of a plurality of articles X having adhesion. The conveyance mechanism 1 according to the present embodiment is included in the weighing hopper 105, and achieves conveyance and weighing of an article X. Examples of an article X having adhesion include a food having adhesion due to powder, such as spice, attached to or moisture on the surface. An article X having adhesion adheres easily to the conveyance face 10 due to the adhesion. An article X may be elongate in shape. In an elongate article X, a contact area between the article X and the conveyance face 10 easily tends to be large, so that the article X adheres easily to the conveyance face 10. The conveyance mechanism 1 according to the present invention can prevent an article X from adhering to the conveyance face 10.

The conveyance face 10 is a face for conveyance of an article X, and may cause an article X to be conveyed by free fall from the upstream side D1 to the downstream side D2 in the conveyance direction MD or may cause an article X to be conveyed by vibration from the upstream side D1 to the downstream side D2 in the conveyance direction MD. The conveyance face 10 includes a first conveyance face 11, a second conveyance face 12 disposed on the downstream side D2 in the conveyance direction MD of the first conveyance face 11, and a protrusion 15 disposed between the first conveyance face 11 and the second conveyance face 12, the protrusion 15 protruding to space S in which an article X glides. The first conveyance face 11 and the second conveyance face 12 may be connected or disconnected in the conveyance direction MD. The boundary between the first conveyance face 11 and the second conveyance face 12 may be formed of the protrusion 15. The protrusion 15 protrudes, to the space S, beyond a first extension line FL1 extending to the downstream side D2 in the conveyance direction along the first conveyance face 11, and protrudes, to the space S, beyond a second extension line FL2 extending to the upstream side D1 in the conveyance direction along the second conveyance face 12. The protrusion 15 protrudes above the first extension line FL1. Preferably, the first extension line FL1 and the second extension line FL2 overlap each other in the side view illustrated in FIG. 3, namely, the second conveyance face 12 is preferably located on the extension line of the first conveyance face 11. In a configuration in which the first extension line FL1 and the second extension line FL2 are in disagreement, namely, in a configuration in which the second conveyance face 12 is located out of the extension line of the first conveyance face 11, preferably, the second conveyance face 12 is located below the extension line of the first conveyance face 11. According to the modes, an article X guided from the first conveyance face 11 to the second conveyance face 12 can be prevented from striking the second conveyance face 12.

FIGS. 4A to 4C are explanatory views of aspects of conveyance of an article X. FIG. 4A illustrates a conveyance face 10Z having no protrusion 15 according to a conventional example. FIGS. 4B and 4C illustrate the conveyance face 10 having the protrusion 15 according to the embodiment. Regarding the conveyance face 10Z having no protrusion 15, as illustrated in FIG. 4A, an article X comes easily in face-contact with the conveyance face 10Z, so that the coefficient of friction between the conveyance face 10Z and the article X rises easily. Thus, an article X is likely to remain adhering to the conveyance face 10Z, for example, of a weighing hopper or a delay may occur in conveyance due to an article X adhering to the conveyance face 10Z. In contrast to this, regarding the conveyance face 10 having the protrusion 15, after an article X conveyed from the first conveyance face 11 reaches the protrusion 15, when part of the article X gets over the protrusion 15, the article X is raised from the first conveyance face 11. The protrusion 15 protrudes above the second extension line FL2 that is the extension line of the second conveyance face 12. Thus, in a case where the article X gets over the protrusion 15, part of the article X is raised from the second conveyance face 12 with the article X in contact with the protrusion 15. Therefore, in comparison to a mode in which provided is a flat face including the first conveyance face 11 and the second conveyance face 12 connected in the conveyance direction, the contact area between the article X and the conveyance face 10 can be reduced, so that the occurrence of fault due to the article X remaining adhering to the conveyance face 10 can be prevented.

A plurality of protrusions 15 may be disposed at intervals in the conveyance direction MD. Such a configuration enables an article X to be raised from the conveyance face 10 a plurality of times on the conveyance path along the conveyance direction MD, so that the occurrence of fault due to the article X remaining adhering to the conveyance face 10 can be further prevented. The protrusion 15 according to the present embodiment includes a first protrusion 151 and a second protrusion 152 disposed on the downstream side D2 in the conveyance direction MD of the first protrusion 151. In such a mode in which a plurality of protrusions 15 is provided, provided may be the first conveyance face 11 on the upstream side D1 of the first protrusion 151 as a boundary and the second conveyance face 12 on the downstream side D2 thereof, and provided may be the first conveyance face 11 on the upstream side D1 of the second protrusion 152 as a boundary and the second conveyance face 12 on the downstream side D2 thereof. The distance G10 in the conveyance direction MD between the peaks 15P of the plurality of protrusions 15 may be shorter than the maximum dimension of each article X (regarding an elongate article X, the length in the longitudinal direction). As illustrated in FIG. 3, an article X ranges over the peaks 15P of the plurality of protrusions 15, so that the contact area between the article X and the conveyance face is further reduced, resulting in smooth conveyance of the article X to the downstream side D2.

As illustrated in FIG. 2, the protrusion 15 may extend in an orthogonal direction CD orthogonal to the conveyance direction MD. An article X can be raised from the conveyance face 10 over a wide range in the orthogonal direction CD of the conveyance face 10, so that the occurrence of fault due to the article X remaining adhering to the conveyance face 10 can be further prevented. The length in the orthogonal direction CD of the protrusion 15 may be, but is not particularly limited to, 50% or more of the entire region in the orthogonal direction CD of the conveyance face 10. The first protrusion 151 and the second protrusion 152 according to the present embodiment are disposed across the center in the orthogonal direction CD of the conveyance face 10. Note that, according to a modification, a plurality of protrusions 15 may be disposed at intervals in the orthogonal direction CD. Such a configuration also enables an article X to be raised from the conveyance face 10 over a wide range on the conveyance path along the orthogonal direction CD, so that the occurrence of fault due to the article X remaining adhering to the conveyance face 10 can be further prevented.

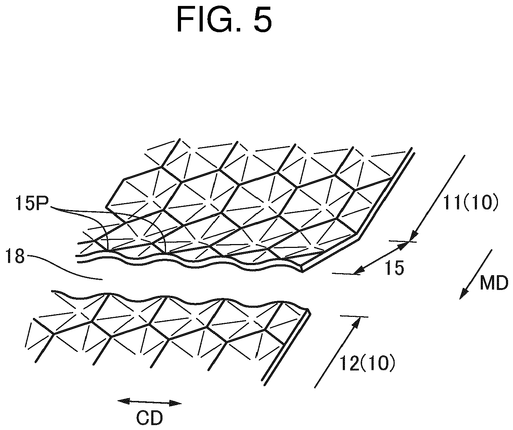

FIG. 5 is a schematic perspective view along arrow B of FIG. 2. The height of the protrusion 15 to the first conveyance face 11 may vary. More specifically, the top side of the protrusion 15 does not extend parallel to the orthogonal direction but extends in a wave shape having alternating recess and protrusion portions. A peak 15P highest in the height of the protrusion 15 is periodic in the orthogonal direction CD, namely, a plurality of peaks 15P is disposed at intervals in the orthogonal direction CD. When an article X gets over the protrusion 15, the article X touches peaks 15P of the protrusion 15. At this time, because the peaks 15P are periodic in the orthogonal direction CD, namely, because the contacts between the article X and the peaks 15P are periodic in the orthogonal direction CD, the contact area of the article X can be reduced. Because of the plurality of peaks 15P provided, the article X can be raised with the interval between each peak 15P with the article X over two or more peaks 15P in a contact manner. Therefore, in a section along the orthogonal direction CD, an article X can be also raised from the conveyance face 10.

The conveyance face 10 may be provided with a through portion 18 passing through the conveyance face 10. The through portion 18 passing through the conveyance face 10 enables verification of the state of conveyance of an article X, for example, from the side which is the face opposite to the conveyance face 10 (face opposite to the face on which an article X is conveyed). Thus, articles X having been built up or an article X remaining adhering to the conveyance face can be grasped. Note that the through portion 18 may be provided adjacently to the protrusion 15 or may be provided apart from the protrusion 15. The through portion 18 according to the present embodiment is achieved by space behind the protrusion 15 protruding from the conveyance face 10. According to the configuration, formation of the protrusion 15 by incision to the conveyance face 10 enables formation of both of the protrusion 15 and the through portion 18.

The conveyance mechanism 1 may include a supplier (not illustrated) that supplies air onto the conveyance face through the through portion 18. In a case where an article X has adhered to the conveyance face 10, the supplier supplies air, so that the article X can be detached from the conveyance face. Therefore, built-up of the articles X due to the article X remaining adhering to the conveyance face can be prevented. The supplier may be disposed on the side which is the back face to the conveyance face 10 (face opposite to the face with which an article comes in contact).

As described above, the conveyance mechanism 1 for use in the combination weighing apparatus 100 may be adopted to at least either the plurality of weighing hoppers 105 or the gathering chute 106. Thus, in at least either the plurality of weighing hoppers 105 or the gathering chute 106, an article X can be prevented from adhering to the conveyance face 10, resulting in suppressing deviation in weight between the articles X weighed in the plurality of weighing hoppers 105 and an aggregate of articles X. In a mode in which the conveyance mechanism 1 is adopted to the plurality of weighing hoppers 105, the conveyance face 10 may include an upstream region 10M1 on the upstream side D1 of the center 10M in the conveyance direction of the conveyance face 10 and a downstream region 10M2 on the downstream side D2 of the center 10M in the conveyance direction of the conveyance face 10. The protrusion 15 may be provided at least in the downstream region 10M2. Note that at least part of the protrusion 15 is required to be provided in the downstream region 10M2, and the protrusion 15 may be provided in the upstream region 10M1 in addition to the downstream region 10M2. Articles X are conveyed from the plurality of weighing hoppers 105 to the downstream side D2 and then are gathered in the gathering chute 106. Because articles X are gathered from the plurality of weighing hoppers 105, if a lag occurs in the timing at which an article X is conveyed to the gathering chute 106, a variation is likely to occur in the weight of an aggregate of articles X. The protrusion 15 is provided in the downstream region 10M2 of the conveyance face 10 close to the gathering chute 106, so that an article X is guided easily and smoothly from the conveyance face 10 to the gathering chute 106. Thus, an error can be reduced in the weight of an aggregate of articles X.

The embodiment of the present invention has been described in detail above. It is obvious to a person skilled in the art that the present invention is not limited to the embodiment in the present specification. The present invention can be carried out in aspects corrected and altered without departing from the gist and scope of the present invention in the claims. Therefore, the present specification is intended for exemplificative description and thus does not have any limitative meanings to the present invention.

### REFERENCE SIGNS LIST

- 1: conveyance mechanism
- 10: conveyance face
- 10M1: upstream region
- 10M2: downstream region
- 11: first conveyance face
- 12: second conveyance face
- 15: protrusion
- 15P: peak
- 18: through portion
- 100: combination weighing apparatus
- 101: supply chute (supply mechanism)
- 102: distribution table (supply mechanism)
- 105: weighing hopper (conveyance mechanism)
- 106: gathering chute
- CD: orthogonal direction
- D1: upstream side
- D2: downstream side
- FL1: first extension line
- FL2: second extension line
- MD: conveyance direction
- X: article

## Claims

1. A conveyance mechanism (1) comprising:
a conveyance face (10) for conveyance of a plurality of articles (X) having adhesion, wherein
the conveyance face includes:
a first conveyance face (11);
a second conveyance face (12) disposed downstream of the first conveyance face in a conveyance direction (MD); and
a protrusion (15) disposed between the first conveyance face and the second conveyance face, the protrusion protruding to space in which the plurality of articles glides, and
the protrusion protrudes beyond a first extension line (FL1) extending downstream in the conveyance direction along the first conveyance face, and protrudes beyond a second extension line (FL2) extending upstream in the conveyance direction along the second conveyance face.

2. The conveyance mechanism according to claim 1, wherein
a plurality of the protrusions is disposed at intervals in the conveyance direction.

3. The conveyance mechanism according to claim 1 or 2, wherein
the protrusion extends in an orthogonal direction (CD) orthogonal to the conveyance direction.

4. The conveyance mechanism according to claim 3, wherein
a height of the protrusion to the first conveyance face varies, and
a peak (15P) highest in the height of the protrusion is periodic in the orthogonal direction and a plurality of the peaks is disposed at intervals in the orthogonal direction.

5. The conveyance mechanism according to any one of claims 1 to 4, wherein
the conveyance face is provided with a through portion (18) passing through the conveyance face.

6. The conveyance mechanism according to claim 5, further comprising a supplier that supplies air onto the conveyance face through the through portion.

7. A combination weighing apparatus (100) including the conveyance mechanism according to any one of claims 1 to 6, comprising:
a supply mechanism of supplying articles;
a plurality of weighing hoppers (102) that is provided downstream of the supply mechanism and each temporarily stores an article in order to measure a weight of the article; and
a gathering chute (106) that gathers the articles discharged from the plurality of weighing hoppers, wherein
the conveyance mechanism is included in at least either the plurality of weighing hoppers or the gathering chute.

8. The combination weighing apparatus according to claim 7, wherein
the conveyance mechanism is included in the plurality of weighing hoppers,
the conveyance face includes an upstream region (10M1) upstream of a center in the conveyance direction of the conveyance face and a downstream region (10M2) downstream of the center in the conveyance direction of the conveyance face, and
the protrusion is provided at least in the downstream region.
